# EUROPEAN PATENT APPLICATION

(11) **EP 4 653 645 A1**
(43) Date of publication of application: **26.11.2025**
(21) Application number: 24744722.0
(22) Date of filing: 18.01.2024
(51) Int. Cl.: E04G 21/12, B21F 15/06, B25J 5/00, B25J 5/02, B25J 13/08, E04C 5/16, G06T 7/00

(54) **REINFORCING-BAR-BUNDLING APPARATUS**

(30) Priority: 20.01.2023 JP 2023007172; 20.01.2023 JP 2023007174; 20.01.2023 JP 2023007176; 20.01.2023 JP 2023007177; 20.01.2023 JP 2023007182; 20.01.2023 JP 2023007187; 10.08.2023 JP 2023131031
(71) Applicant: MAX CO., LTD., Tokyo 103-8502 (JP)
(72) Inventor: AZAMI, Takanari, Tokyo 103-8502 (JP); AGEHARA, Kigen, Tokyo 103-8502 (JP)
(74) Representative: Samson & Partner Patentanwälte mbB
(86) International application number: PCT/JP2024/001339
(87) International publication number: WO 2024/154802

(57) **Abstract**

A reinforcing-bar-bundling apparatus that makes it possible for a plurality of reinforcing bars (R10) to travel at a first pitch and for a plurality of reinforcing bars (R20A) to travel at a second pitch higher than the first pitch, the reinforcing-bar-bundling apparatus comprising: roller parts (122a, 122c) via which the reinforcing bars are rotated, the roller parts (122a, 122c) having a width that is greater than the difference between the second pitch and the first pitch and less than the difference between 1.5 times the second pitch and 0.5 times the first pitch; roller parts (122b, 122d) on which other reinforcing bars rotate, the roller parts (122b, 122d) having a width that is greater than the difference between the second pitch and the first pitch and less than the difference between 1.5 times the second pitch and 0.5 times the first pitch; and a motor that drives the roller parts (122a to 122d).

## Description

### TECHNICAL FIELD

The present invention relates to a rebar binding device.

### BACKGROUND ART

In recent years, techniques have been considered for automating rebar binding work in which, for example, a rebar extending in a vertical direction and a rebar extending in a horizontal direction are bound together at their intersection portions by means of a wire or the like.

For example, Patent Literature 1 discloses a technique in which a valley portion of a V-shaped tapered drive wheel is brought into contact with a rebar extending vertically, thereby allowing the drive wheel to travel on the rebar.

### CITATION LIST

### PATENT LITERATURE

Patent Literature 1: JP2019-39174A

### SUMMARY OF INVENTION

### TECHNICAL PROBLEM

However, the technique described in Patent Literature 1 had a problem that it was not possible to travel diagonally in a direction that intersects with an extension direction of the rebar, and it was necessary to adjust a tread width of the drive wheel in advance to match a pitch of the rebars to be installed.

The present invention is made in consideration of the above circumstance, and an object of the present invention is to provide a rebar binding device that can travel on a plurality of rebars with different pitches without need for prior adjustment.

### SOLUTION TO PROBLEM

An aspect of the present disclosure is a rebar binding device that is configured to be capable of traveling on a plurality of rebars arranged at a first pitch and that is configured to be capable of traveling on a plurality of rebars arranged at a second pitch larger than the first pitch, the device including a first wheel that is configured to rotate on the rebar and that has a width larger than a difference between the second pitch and the first pitch and smaller than a difference between 1.5 times the second pitch and 0.5 times the first pitch, a second wheel that is configured to rotate on a rebar different from the first wheel and that has a width larger than the difference between the second pitch and the first pitch and smaller than the difference between 1.5 times the second pitch and 0.5 times the first pitch, and a driver that is configured to rotate the first wheel and the second wheel.

### ADVANTAGEOUS EFFECTS OF INVENTION

According to the present disclosure, even when traveling on rebars with different pitches, it is possible to travel on a plurality of rebars with different pitches without need for prior adjustment.

### BRIEF DESCRIPTION OF DRAWINGS

[FIG. 1] FIG. 1 is an overall perspective view of a rebar binding robot 100 according to an example of the present disclosure, as viewed obliquely from above.
[FIG. 2] FIG. 2 is an overall perspective view of the rebar binding robot according to the example of the present disclosure, as viewed obliquely from below.
[FIG. 3] FIG. 3 is a plan view of the rebar binding robot 100, as viewed from above (above in a Z-direction).
[FIG. 4] FIG. 4 is a plan view of the rebar binding robot 100, as viewed from below (below in the Z-direction).
[FIG. 5] FIG. 5 is a perspective view of the rebar binding robot 100 with a rebar binding unit 110 removed, as viewed obliquely from above.
[FIG. 6] FIG. 6 is a perspective view of the rebar binding robot 100 with the rebar binding unit 110 removed, as viewed obliquely from above.
[FIG. 7] FIG. 7 is a diagram illustrating a functional block configuration of the rebar binding robot 100.
[FIG. 8] FIG. 8 is a view of the rebar binding robot 100 traveling along a first rebar R10, as viewed from a Y-direction.
[FIG. 9] FIG. 9 is a view of the rebar binding robot 100 traveling along the first rebar R10, as viewed from an X-direction.
[FIG. 10] FIG. 10 is a view of the rebar binding robot 100 that has stopped traveling and is performing binding work, as viewed from the Y-direction.
[FIG. 11] FIG. 11 is a view of the rebar binding robot 100 performing binding work, as viewed from an X-direction.
[FIG. 12] FIG. 12 is a view of the rebar binding robot 100 performing binding work, as viewed from below in the Z-direction.
[FIG. 13A] FIG. 13A is a front view of the rebar binding robot 100, as viewed from the Y-direction.
[FIG. 13B] FIG. 13B is a front view of the rebar binding robot 100, as viewed from the Y-direction.

### DESCRIPTION OF EMBODIMENTS

Hereinafter, present embodiments will be described with reference to the accompanying drawings. In order to facilitate understanding of the description, the similar components in each drawing are denoted by the same reference signs whenever possible, and duplicate descriptions are omitted.

The configuration of a binding device 100 according to an embodiment of the present disclosure will be described below. In the present embodiment, the binding device is a rebar binding device that binds a plurality of rebars arranged to cross each other, and may be, for example, a rebar binding robot. In the following, a case will be described in which the binding device 100 is a rebar binding robot, and the binding device 100 will also be referred to as a rebar binding robot 100. In addition, each drawing may show an X-axis, a Y-axis, and a Z-axis. The X, Y, and Z axes form a right-handed three-dimensional Cartesian coordinate system. Hereinafter, the direction of an X-axis arrow may be referred to as a forward X-axis, +X-direction, right side of an X-direction, or right side of the X-axis, and a direction opposite to the arrow may be referred to as a backward X-axis, -X-direction, left side of the X-direction, or left side of the X-axis. The same is applied to the other axes. The front side on a Z-axis and the rear side on the Z-axis may be respectively referred to as the "upper side" or "upper direction" and the "lower side" or "lower direction". Furthermore, a plane perpendicular to the X-axis, Y-axis, or Z-axis may be respectively referred to as a YZ plane, a ZX plane, or an XY plane. However, these directions are used for convenience in describing relative positional relationships. Therefore, these directions do not define absolute positional relationships.

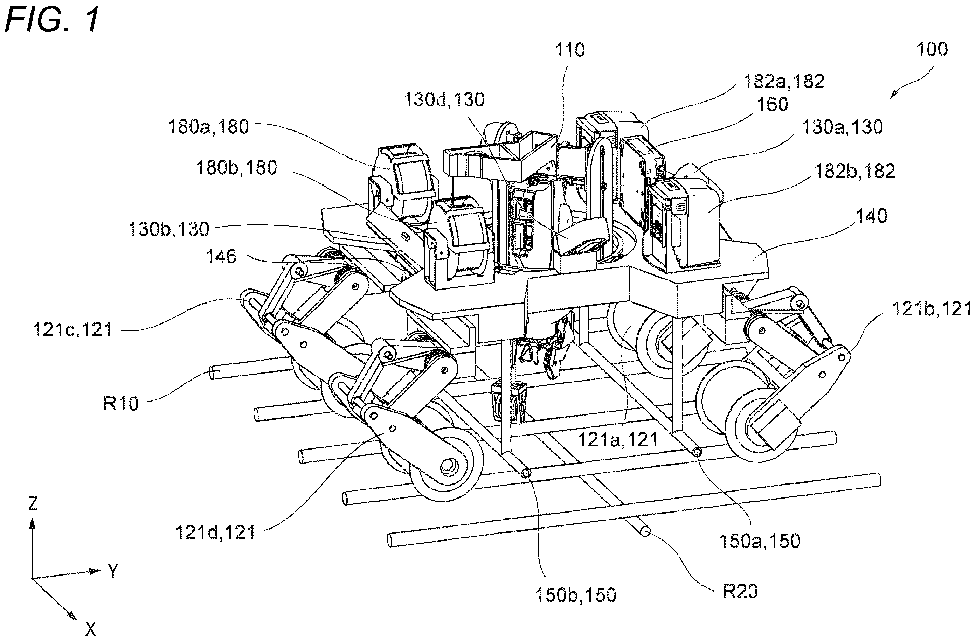

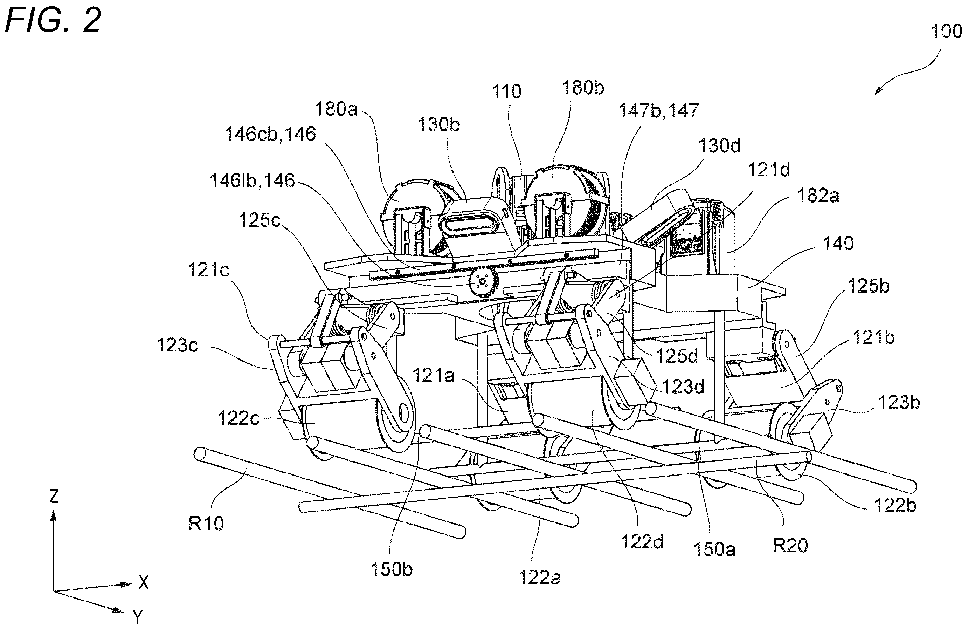

FIG. 1 is an overall perspective view of the rebar binding robot 100 according to the example of the present disclosure, as viewed obliquely from above. FIG. 2 is an overall perspective view of the rebar binding robot according to the example of the present disclosure, as viewed obliquely from below. As illustrated in FIGS. 1 and 2, the rebar binding robot 100 according to the embodiment of the present disclosure includes a rebar binding unit 110, a traveling unit 121, and a sensor unit 130. The rebar binding robot 100 may further include other components, such as a main body unit 140, a support bar 150, a control unit 160, a reel 180 (first reel 180a and second reel 180b), a battery 182 (first battery 182a and second battery 182b), a lateral movement unit 146, and a memory device 198 (not illustrated).

FIGS. 1 and 2 also illustrate a rebar group R including a plurality of rebars R10 (also referred to as "first rebars" or "vertical rebars" in the present embodiment) extending in the Y-direction. As illustrated in FIGS. 1 and 2, the rebar binding robot 100 is disposed on the rebar group R so as to travel along the first rebar R10. In addition to the plurality of rebars R10, the rebar group R may include a plurality of rebars (also referred to as "second rebars R20" or "horizontal rebars" in the present embodiment) extending in the X-direction.

In the embodiment of the present disclosure, the first rebar R10 is arranged so that a first direction, which is a direction in which the first rebar R10 extends, is parallel to the Y-direction. Further, the second rebar R20 is arranged so that a second direction, which is a direction in which the second rebar R20 extends, is parallel to the X-direction. Therefore, in the exemplary embodiment of the present disclosure, the first rebar R10 and the second rebar R20 are arranged so as to be perpendicular to each other. In addition, the first rebar R10 and the second rebar R20 are arranged so that a plane (also referred to as the "rebar plane" in the present embodiment) formed by the first rebar R10 and the second rebar R20 is parallel to the XY plane. Therefore, the plane formed by the first rebar R10 and the second rebar R20 is a horizontal plane in the present embodiment. Furthermore, arrangement of the first rebar R10 and the second rebar R20 is not limited thereto. For example, the first rebar R10 and the second rebar R20 may be arranged so as to be non-perpendicular to each other. For example, the first rebar R10 and the second rebar R20 may be arranged such that an angle between the first rebar R10 and the second rebar R20 is, for example, 30°, 45°, 60°, or other angle. In addition, in the embodiment of the present disclosure, the first rebar R10 and the second rebar R20 are arranged so as to be perpendicular to each other, but for example, depending on a point of intersection, they do not necessarily have to be in a perpendicular relationship, and may be arranged so as to form an angle of, for example, 85° or more and less than 90°.

In addition, the first rebar R10 and the second rebar R20 have a finite length, and a plurality of first rebars R10 or a plurality of second rebars R20 may be connected via joints in a first direction or a second direction. Furthermore, the first rebar R10 and the second rebar R20 may have ends.

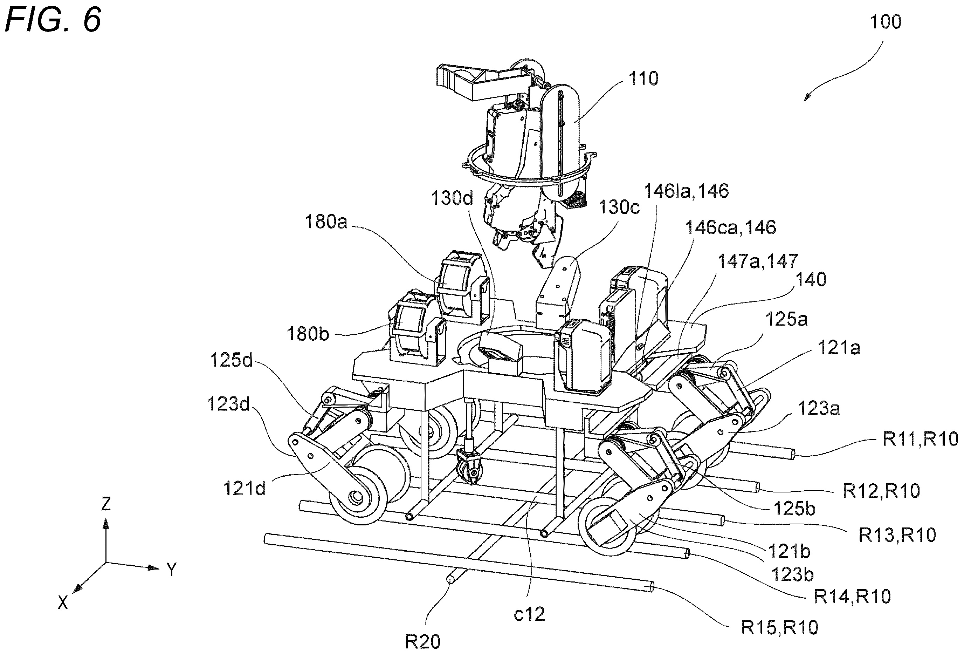

The rebar binding unit 110 is configured to bind an intersection point c12 (FIG. 6) between the first rebar R10 and the second rebar R20. Binding work of the rebar binding unit 110 at the intersection point c12 of the first rebar R10 and the second rebar R20 will be described in detail below.

As illustrated in FIGS. 1 and 2, the traveling unit 121 may have four traveling units 121a, 121b, 121c, and 121d (in the present embodiment, these are also respectively referred to as a "first traveling unit", a "second traveling unit", a "third traveling unit", and a "fourth traveling unit"). In the embodiment of the present disclosure, the traveling unit 121 is disposed on the rebar group R so that the rebar binding robot 100 advances in the Y-direction. The first traveling unit 121a, the second traveling unit 121b, the third traveling unit 121c, and the fourth traveling unit 121d respectively have a first roller portion 122a, a second roller portion 122b, a third roller portion 122c, and a fourth roller portion 122d, and the first roller portion 122a, the second roller portion 122b, the third roller portion 122c, and the fourth roller portion 122d are configured to travel on any one of the plurality of first rebars R10 along the Y-direction (first direction), which is an extension direction of the first rebars R10.

In the present embodiment, the traveling unit 121 is an example of a moving unit (a moving unit 120 described below). Instead of the traveling unit 121 or in addition to the traveling unit 121, the moving unit 120 may have the configuration of a moving unit other than the traveling unit 121.

In the embodiment of the present disclosure, the first traveling unit 121a, the second traveling unit 121b, the third traveling unit 121c, and the fourth traveling unit 121d are described as being configured to advance in the Y-direction as an example, but the first traveling unit 121a, the second traveling unit 121b, the third traveling unit 121c, and the fourth traveling unit 121d may also be configured to advance in a direction other than the Y-direction. For example, it may proceed in a direction at an angle of several degrees to several tens of degrees from the Y-direction. Even when the orientation of the rebar binding robot 100 is tilted due to the presence of a foreign object on the first rebar R10 on which the rebar binding robot 100 travels, the rebar binding robot 100 can proceed so as to almost follow the first rebar R10, thereby allowing the rebar binding unit 110 of the rebar binding robot 100 to perform the binding operation of the intersection point c12 of the first rebar R10 and the second rebar R20. Furthermore, even in a construction site where the first rebar R10 is arranged in a curved shape, the first traveling unit 121a, the second traveling unit 121b, the third traveling unit 121c, and the fourth traveling unit 121d may be configured to advance in a curved shape to follow the first rebar R10 having a curved shape, and in this case, the first direction, which is the extension direction of the first rebar R10, may be different for each point that forms the curve.

As illustrated in FIGS. 1 and 2 and FIG. 3 described below, the sensor unit 130 has a sensor 130a, a sensor 130b, a sensor 130c, and a sensor 130d (in the present embodiment, these are also respectively referred to as a "first sensor", a "second sensor", a "third sensor", and a "fourth sensor"). The first sensor 130a and the second sensor 130b are arranged to be spaced apart from each other along the Y-direction (in the present embodiment, a direction in which a straight line connecting the first sensor 130a and the second sensor 130b extends is also referred to as a "third direction") in FIGS. 1 and 2. In addition, the fourth sensor 130d is arranged on a side (a side on a back side of the paper of FIGS. 1 and 2) opposite to a side on which the third sensor 130c of the rebar binding robot 100 is provided, and the third sensor 130c and the fourth sensor 130d are arranged so as to be spaced apart from each other along a direction (the X-direction in the example illustrated in FIGS. 1 and 2; in the present embodiment, a direction in which a straight line connecting the third sensor 130c and the fourth sensor 130d extends is also referred to as a "fourth direction") intersecting with the Y-direction in FIGS. 1 and 2.

The first sensor 130a, the second sensor 130b, the third sensor 130c, and the fourth sensor 130d are configured to be capable of detecting the first rebar R10 and/or the second rebar R20. For example, the first sensor 130a and the second sensor 130b may be configured to detect the first rebar R10, and the third sensor 130c and the fourth sensor 130d may be configured to detect the second rebar R20. Alternatively, the first sensor 130a, the second sensor 130b, the third sensor 130c, and the fourth sensor 130d may all be configured to be capable of detecting the first rebar R10 and the second rebar R20.

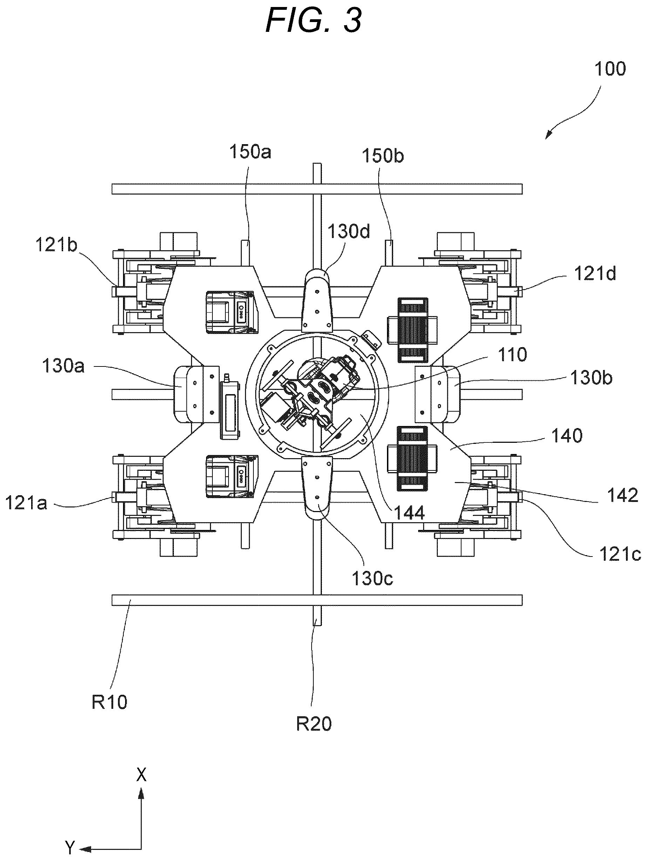

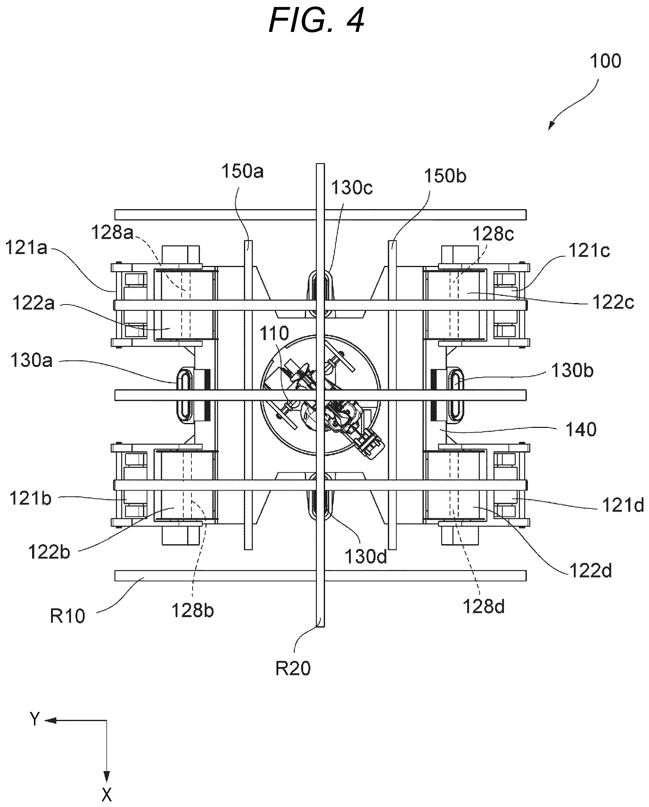

FIG. 3 illustrates a plan view of the rebar binding robot 100 as viewed from above (above in the Z-direction). FIG. 4 illustrates a plan view of the rebar binding robot 100 as viewed from below (below in the Z-direction).

As can be seen from FIGS. 3 and 4, the first traveling unit 121a and the second traveling unit 121b may be arranged on one side and the other side (on the left and right sides, respectively, in the X-direction in FIG. 3) of the fourth direction (X-direction) relative to the first sensor 130a. Furthermore, the third traveling unit 121c and the fourth traveling unit 121d may be disposed on one side and the other side in the fourth direction (X-direction) relative to the second sensor 130b. In other words, the first sensor 130a may be disposed between the first traveling unit 121a and the second traveling unit 121b in the fourth direction. Similarly, the second sensor 130b may be disposed between the third traveling unit 121c and the fourth traveling unit 121d in the fourth direction.

Furthermore, as illustrated in FIGS. 3 and 4, the third sensor 130c may be arranged between the first traveling unit 121a and the third traveling unit 121c in the third direction (Y-direction in FIGS. 3 and 4), and similarly, the fourth sensor 130d may be arranged between the second traveling unit 121b and the fourth traveling unit 121d in the third direction (Y-direction).

Furthermore, for example, a camera forming the first sensor 130a may be positioned, when viewed from below, on a straight line passing through a rotation shaft 128a of the first roller portion 122a forming the first traveling unit 121a and a rotation shaft 128b of the second roller portion 122b forming the second traveling unit 121b, or in front of (in the +Y-direction in FIG. 4) the straight line passing through the rotation shafts 128a and 128b. Similarly, a camera forming the second sensor 130b may be positioned, when viewed from below, on a straight line passing through a rotation shaft 128c of the third roller portion 122c forming the third traveling unit 121c and a rotation shaft 128d of the fourth roller portion 122d forming the fourth traveling unit 121d, or behind (in the -Y-direction in FIG. 4) the straight line passing through the rotation shaft 128c and the rotation shaft 128d.

As illustrated in FIG. 3, FIG. 4, or the like, the first sensor 130a is disposed in front of (+Y-direction) the main body unit 140 in the Y-axis direction. Similarly, the second sensor 130b is disposed behind (-Y-direction) the main body unit 140 in the Y-axis direction. The third sensor 130c and the fourth sensor 130d are respectively disposed on the left and right sides in the X-direction when viewed from above in FIG. 3 of the main body unit 140. That is, as can be seen, for example, from FIG. 4, in the present embodiment, the first sensor 130a, the second sensor 130b, the third sensor 130c, and the fourth sensor 130d are positioned on or inside an outer edge of a rectangle virtually formed by connecting approximately centers of the first traveling unit 121a, the second traveling unit 121b, the third traveling unit 121c, and the fourth traveling unit 121d in a planar view of the rebar binding robot 100. In addition, the rectangle virtually formed by the first traveling unit 121a to the fourth traveling unit 121d may be a square, for example, when an interval between the respective traveling units in the X-direction and the Y-direction is approximately equal, and in this case, the first sensor 130a to the fourth sensor 130d may be positioned on the outer edge of the virtual square or on the inside thereof. Furthermore, depending on the arrangement of the first traveling unit 121a to the fourth traveling unit 121d, the first traveling unit 121a to the fourth traveling unit 121d may virtually form a quadrangle other than a rectangle or a square, and in that case as well, the first sensor 130a to the fourth sensor 130d may be arranged on the outer edge of the virtual quadrangle or on the inside thereof.

As illustrated in FIGS. 1 and 3, the main body unit 140 may have a main body upper surface 142. The main body upper surface 142 may have, for example, a hole 144 having a circular shape and formed near the center, and the rebar binding unit 110 may be arranged to pass through the hole 144.

In the present embodiment, the rebar binding robot 100 may include, for example, two support bars 150 (a first support bar 150a and a second support bar 150b, respectively). The first support bar 150a and the second support bar 150b are bars extending in one direction, for example, and are provided in parallel in the fourth direction (the X-direction in FIGS. 1 to 4). Therefore, in the embodiment of the present disclosure, the first support bar 150a and the second support bar 150b are provided to be parallel to each other in a horizontal direction, for example. As illustrated in FIGS. 1 to 4, the first support bar 150a and the second support bar 150b may be spaced apart from each other in the Y-direction (third direction). The first support bar 150a and the second support bar 150b may be configured to support the main body unit 140 of the rebar binding robot 100, for example, when the rebar binding robot 100 moves horizontally (the X-direction in FIGS. 1 to 4, the fourth direction in the rebar binding robot 100).

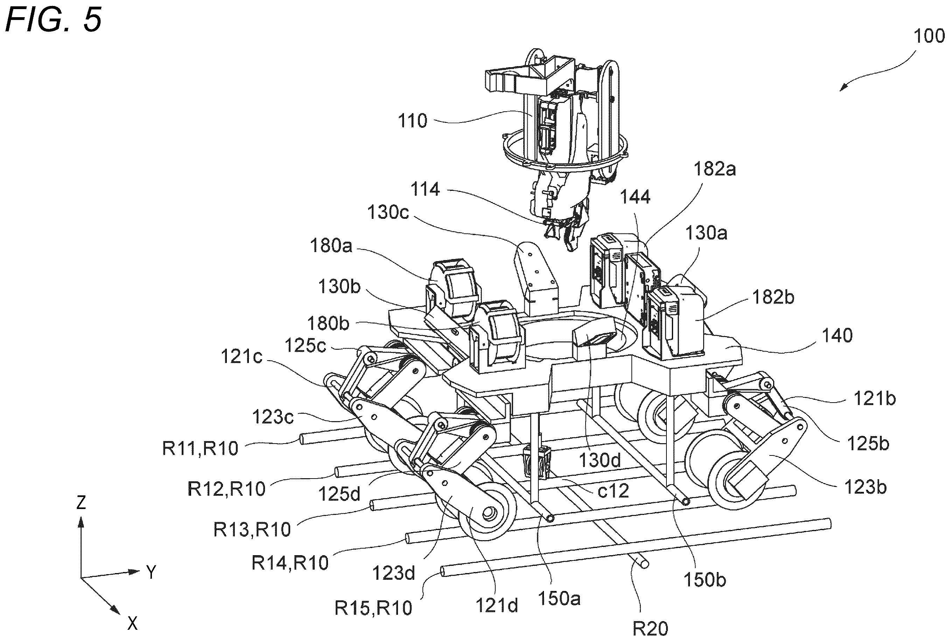

FIG. 5 is a perspective view of the rebar binding robot 100 with the rebar binding unit 110 removed, as viewed from diagonally rear right. FIG. 6 is a perspective view of the rebar binding robot 100 with the rebar binding unit 110 removed, as viewed from diagonally forward right. As illustrated in FIGS. 5 and 6, the rebar binding unit 110 may be provided so as to be movable in a vertical direction (Z-direction in FIG. 5) while passing through the hole 144. Therefore, for example, when the rebar binding robot 100 reaches the intersection point c12 of the first rebar R10 and the second rebar R20, the rebar binding unit 110 is lowered, and the intersection point c12 of the first rebar R10 and the second rebar R20 is bound together. As illustrated in FIGS. 5 and 6, the rebar binding robot 100 has reels 180a and 180b. The reels 180a and 180b accommodate a wire used to bind rebars, and are configured so that when the rebar binding unit 110 binds the intersection point c12 of the first rebar R10 and the second rebar R20, the wire accommodated in the reel 180a and/or reel 180b is pulled out to bind the intersection point c12. Although detailed description is omitted, the rebar binding unit 110 has a wire twisting portion 114 (FIG. 5) at one end (a lower end in the Z-direction in FIG. 5) of the rebar binding unit 110 that has a wire guide, or the like, and is configured to perform rebar binding work. The rebar binding work of the wire twisting portion 114 may be achieved, for example, by a function similar to that of a known rebar binding machine.

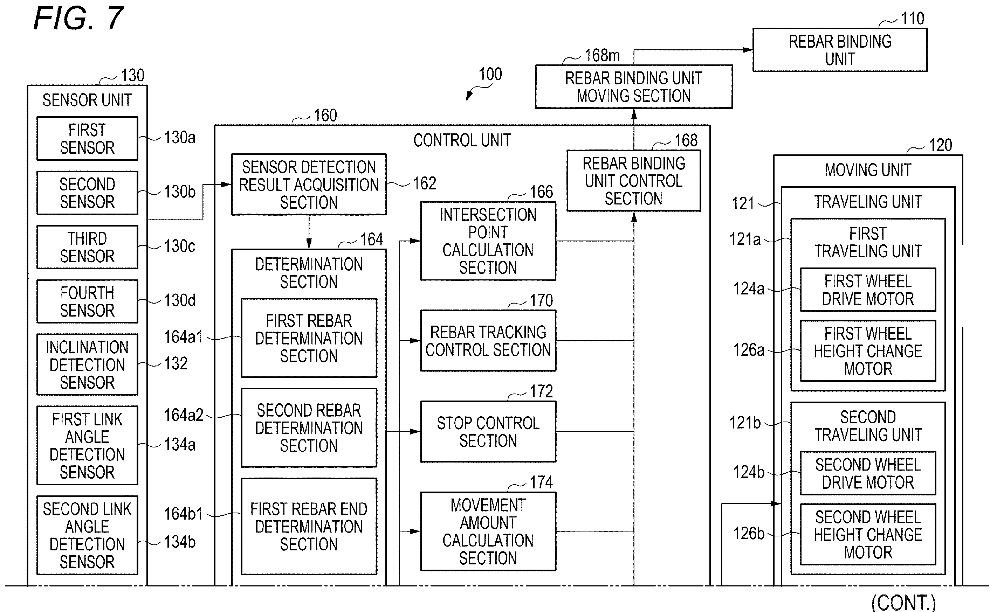

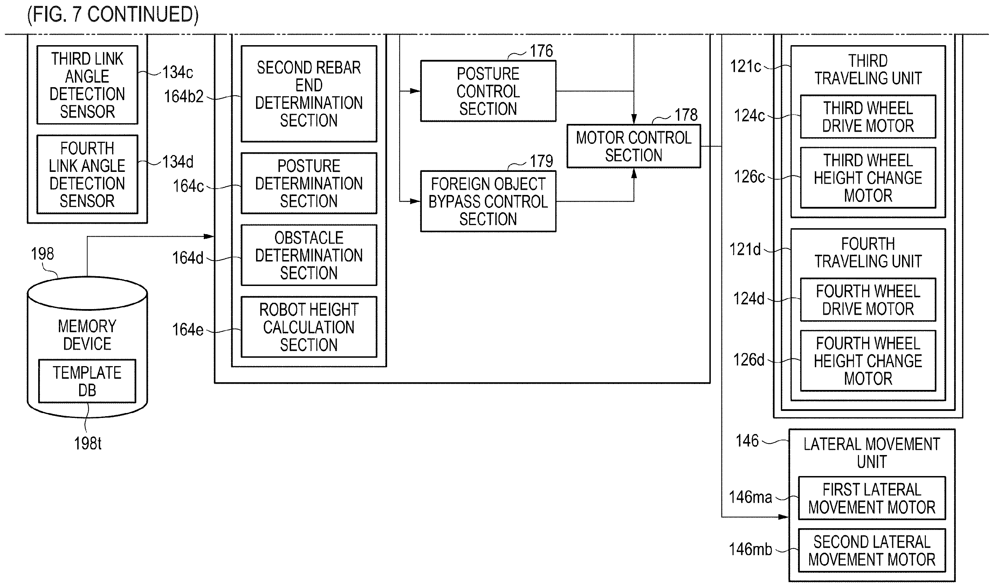

FIG. 7 is a diagram illustrating a functional block configuration of the rebar binding robot 100. As illustrated in FIG. 7, the rebar binding robot 100 may include, in addition to the rebar binding unit 110, the traveling unit 121, the sensor unit 130, and the like described above, a control unit 160, a lateral movement unit 146, and a memory device 198.

The control unit 160 is configured to control movement and binding works performed by the rebar binding robot 100. The control unit 160 may include a sensor detection result acquisition section 162, a determination section 164, an intersection point calculation section 166 (in the present embodiment, also referred to as an "intersection point estimation section" or "intersection point estimation unit"), a rebar binding unit control section 168, a rebar tracking control section 170, a stop control section 172, a movement amount calculation section 174, a posture control section 176, a motor control section 178, and a foreign object bypass control section 179.

In the rebar binding robot 100 of the present embodiment, as illustrated in FIG. 1, the control unit 160 is disposed on an opposite side of the reel 180a and reel 180b with respect to the rebar binding unit 110 in the Y-direction. More specifically, as illustrated in FIG. 1, the reels 180a and 180b are disposed in the -Y-direction of the rebar binding unit 110, whereas the control unit 160 is disposed in the +Y-direction of the rebar binding unit 110. In particular, immediately after replacing the wire reel, the reel with the wire wound therearound becomes relatively heavy, but by positioning the control unit 160 on the opposite side of the rebar binding unit 110, it is possible to balance the weight.

The lateral movement unit 146 (FIG. 7) is configured to control the movement of the main body unit 140 of the rebar binding robot 100. In the rebar binding robot 100 according to the embodiment of the present disclosure, the rebar binding robot 100 may be moved in the horizontal direction by the lateral movement unit 146. The lateral movement unit 146 may be equipped with a first lateral movement motor 146a and a second lateral movement motor 146b, and for example, when lateral movement of the rebar binding robot 100 described below is performed, the main body unit 140 may be moved horizontally by the two motors 146a and 146b.

The memory device 198 may include, for example, a memory medium (for example, a semiconductor memory element) or other media for non-transitory storage of one or more computer programs executed in the control unit 160, data used to control the rebar binding robot 100, and the like. The memory device 198 may include, for example, a template database 198t. The template database 198t may store, for example, as described below, images of templates used when detecting the first rebar R10 and/or the second rebar R20, or detecting the end of the first rebar R10 and/or the end of the second rebar R20, using template matching based on the detection results by the sensor unit 130, or data obtained by applying image processing such as frequency analysis to the template images. In addition, the control unit 160 may further have a template data creation section, and may be configured to create template data based on images captured by the sensor unit 130 according to the site where the rebar binding work is to be performed, and store the template data in the template database 198t. The template data stored in the template database 198t may be accumulated, for example, whenever new template data is created, or may be deleted when binding work is completed at each construction site. Alternatively, the created template data may be stored in the template database 198t of the memory device 198 for a certain period of time and then deleted, for example, periodically.

The sensor detection result acquisition section 162 acquires a detection result by the sensor unit 130. For example, the detection results of the first sensor 130a, the second sensor 130b, the third sensor 130c, and/or the fourth sensor 130d of the sensor unit 130 may be used to determine the position of the first rebar R10 and/or the second rebar R20 by the first rebar determination section 164a1 and/or the second rebar determination section 164a2 of the determination section 164 described below. In addition, the detection results of the first sensor 130a, the second sensor 130b, the third sensor 130c, and/or the fourth sensor 130d may be used to determine the position of the end of the first rebar R10 and/or the end of the second rebar R20 by a first rebar end determination section 164b1 and/or a second rebar end determination section 164b2 of the determination section 164.

The determination section 164 may include the first rebar determination section 164a1, the second rebar determination section 164a2, the first rebar end determination section 164b1, the second rebar end determination section 164b2, a posture determination section 164c, an obstacle determination section 164d, and a robot height calculation section 164e. The first rebar determination section 164al and the second rebar determination section 164a2 determine the position of the first rebar R10 and/or the second rebar R20, for example, using the detection results of the first sensor 130a, the second sensor 130b, the third sensor 130c, and/or the fourth sensor 130d acquired by the sensor detection result acquisition section 162. As described below, the first rebar determination section 164al and the second rebar determination section 164a2 may determine the position of the first rebar R10 and/or the second rebar R20 by performing template matching based on the captured images that are the detection results of the first sensor 130a to the fourth sensor 130d.

The first rebar end determination section 164b1 and the second rebar end determination section 164b2 determine the end of the first rebar R10 and/or the end of the second rebar R20, for example, using the detection results of the first sensor 130a, the second sensor 130b, the third sensor 130c, and/or the fourth sensor 130d acquired by the sensor detection result acquisition section 162. The first rebar end determination section 164b1 and the second rebar end determination section 164b2, like the first rebar determination section 164al and the second rebar determination section 164a2, may also determine the position of the end of the first rebar R10 and/or the end of the second rebar R20 based on template matching.

The robot height calculation section 164e may calculate a height of the rebar binding robot 100 from the rebar group R based on, for example, the detection results of the first sensor 130a, the second sensor 130b, the third sensor 130c, and/or the fourth sensor 130d. For example, when (for example, when an area including the first rebar R10 and/or the second rebar R20 is imaged) the first rebar R10 and/or the second rebar R20 are imaged by the first sensor 130a, the second sensor 130b, the third sensor 130c, and/or the fourth sensor 130d, the robot height calculation section 164e may calculate the height of the rebar binding robot 100 from the rebar group R by calculating a distance of the rebar binding robot 100 from the rebar group R based on a relative size of the first rebar R10 and/or the second rebar R20 in the captured image of the imaged first rebar R10 and/or the second rebar R20.

The height of the rebar binding robot 100 from the rebar group R may be calculated based on an angle of the traveling unit 121, for example. As illustrated in FIG. 6, the traveling unit 121a has a first main body side link portion 125a connected to the main body unit 140, and a first roller side link portion 123a connected to the first roller portion 122a, and the first main body side link portion 125a and the first roller side link portion 123a may form a link mechanism. In this case, a link angle, which is an angle between the first main body side link portion 125a and the first roller side link portion 123a, may be detected by a first link angle detection sensor 134a (FIG. 7) of the sensor unit 130, and the height of the first traveling unit 121a may be calculated based on the link angle.

Similarly, as illustrated in FIG. 2, the second traveling unit 121b, the third traveling unit 121c, and the fourth traveling unit 121d respectively have a second main body side link portion 125b and a second roller side link portion 123b, a third main body side link portion 125c and a third roller side link portion 123c, and a fourth main body side link portion 125d and a fourth roller side link portion 123d, and the heights of the second traveling unit 121b, the third traveling unit 121c, and the fourth traveling unit 121d may be respectively calculated by detecting link angles formed by the second main body side link portion 125b and the second roller side link portion 123b, the third main body side link portion 125c and the third roller side link portion 123c, and the fourth main body side link portion 125d and the fourth roller side link portion 123d using a second link angle detection sensor 134b, a third link angle detection sensor 134c, and a fourth link angle detection sensor 134d.

The robot height calculation section 164e may calculate the height of the rebar binding robot 100 from the rebar group R based on the heights (heights from the rebar group R) of the first traveling unit 121a, the second traveling unit 121b, the third traveling unit 121c, and the fourth traveling unit 121d calculated in this manner. For example, the height of the rebar binding robot 100 may be calculated from an average value of some or all of the calculated heights of the first traveling unit 121a, the second traveling unit 121b, the third traveling unit 121c, and the fourth traveling unit 121d. Furthermore, for example, when the rebar binding robot 100 is positioned parallel or nearly parallel to a virtual plane formed by the rebar group R, the height of the rebar binding robot 100 may be determined by any one of the heights of the first traveling unit 121a, the second traveling unit 121b, the third traveling unit 121c, and the fourth traveling unit 121d.

As illustrated in FIG. 7, the sensor unit 130 may include an inclination detection sensor 132 in addition to the first to fourth sensors 130a to 130d described above. As the inclination detection sensor 132, for example, a known inclination sensor or horizontal sensor, or other sensor capable of detecting an inclination angle of the rebar binding robot 100 may be used. The sensor detection result acquisition section 162 may also acquire the detection result of the inclination detection sensor 132. Based on the detection result of the inclination detection sensor 132, for example, the posture of the rebar binding robot 100 may be determined by the posture determination section 164c of the determination section 164, and based on the determination result of the posture determination section 164c, the posture control section 176 may drive height change motors 126 (a first height change motor 126a of the first traveling unit 121a, a second height change motor 126b of the second traveling unit 121b, a third height change motor 126c of the third traveling unit 121c, and/or a height change motor 126d of the fourth traveling unit 121d) of the traveling units 121 to adjust the posture of the rebar binding robot 100.

The rebar binding robot 100 may, for example, drive the height change motor 126 based on the detection result of the inclination detection sensor 132 so that the main body unit 140 is parallel to a surface (also referred to as a "rebar surface" in the present embodiment) formed by the first rebar R10 and/or the second rebar R20. For example, when the first rebar R10 and the second rebar R20 are arranged so that the rebar surface extends horizontally, if the rebar binding robot 100 is inclined in the X-direction, the height of the first traveling unit 121a and the third traveling unit 121c, or the second traveling unit 121b and the fourth traveling unit 121d, among the first traveling unit 121a to the fourth traveling unit 121d, may be changed to adjust the posture of the rebar binding robot 100.

The intersection point calculation section 166 estimates the intersection point c12 between the first rebar R10 and the second rebar R20 by calculating it. The intersection point calculation section 166 may, for example, calculate the position of the intersection point c12 based on the position of the first rebar R10 and the position of the second rebar R20 determined by the first rebar determination section 164a1 and the second rebar determination section 164a2, as described below. Based on the calculated position of the intersection point c12, the rebar binding robot 100 may perform binding work using the rebar binding unit 110. Based on the estimated position of the intersection point c12, the motor control section 178 may adjust the position of the rebar binding robot 100 using the first traveling unit 121a, the second traveling unit 121b, the third traveling unit 121c, and/or the fourth traveling unit 121d so that the rebar binding unit 110 is on the intersection point c12.

The rebar binding unit control section 168 controls the movement of the rebar binding unit 110 by controlling a rebar binding unit moving section 168m. The rebar binding unit 110 can take a binding position where it performs a binding operation to bind the intersection point c12 where the first rebar R10 and the second rebar R20 intersect, and a retreat position where it retreats after the binding operation is completed while moving to the intersection point c12 where the next binding operation is performed. The rebar binding unit 110 moves in the -Z-direction when moving from the retreat position towards the binding position, and moves in the +Z-direction when moving from the binding position towards the retreat position. Such movement of the rebar binding unit 110 in the Z-direction is achieved by the rebar binding unit moving section 168m formed by a motor or the like. In addition, a lifting and lowering operation of the rebar binding unit 110 in the Z-direction by the rebar binding unit moving section 168m is controlled by the rebar binding unit control section 168.

The rebar binding unit control section 168 also controls the binding operation of the rebar binding unit 110 at the intersection point c12 after the rebar binding unit 110 moves to the binding position. For example, the rebar binding unit 110 performs binding work using a wire pulled out from the reel 180 of the wire by a wire pullout portion (described below) and is controlled by the rebar binding unit control section 168. For example, after moving the rebar binding robot 100 by the first traveling unit 121a, the second traveling unit 121b, the third traveling unit 121c, and/or the fourth traveling unit 121d so that the rebar binding unit 110 is positioned above the intersection point c12, the rebar binding unit control section 168 may control the rebar binding unit moving section 168m to lower the rebar binding unit 110 to a binding position approaching the intersection point c12, and perform binding at the intersection point c12.

The rebar tracking control section 170 may, for example, control the traveling unit 121 via the motor control section 178 so that the rebar binding robot 100 follows the first rebar R10 on which the rebar binding robot 100 is traveling, based on information such as the position of the first rebar R10 determined by the first rebar determination section 164a1. For example, as illustrated in FIG. 5, when the rebar binding robot 100 travels on a first rebar R12 and a first rebar R14, the drive motors (a first wheel drive motor 124a driving the first roller portion 122a, a second wheel drive motor 124b driving the second roller portion 122b, a third wheel drive motor 124c driving the third roller portion 122c, and/or a fourth wheel drive motor 124d driving the fourth roller portion 122d) of the traveling units 121 may be driven to prevent the rebar binding robot 100 from coming off the first rebar R12 and the first rebar R14.

For example, among the first wheel drive motor 124a, the second wheel drive motor 124b, the third wheel drive motor 124c, and the fourth wheel drive motor 124d, the first wheel drive motor 124a and the third wheel drive motor 124c, which are the drive motors of the first traveling unit 121a and the third traveling unit 121c, which are arranged at the same position or approximately the same position in the X-direction, may be accelerated or decelerated relative to the second wheel drive motor 124b and the fourth wheel drive motor 124d, which are the drive motors of the second traveling unit 121b and the fourth traveling unit 121d, which are arranged on the other side in the X-direction, to adjust the position of the rebar binding robot 100 and make the rebar binding robot 100 travel to follow the first rebar R10.

Alternatively, the rebar tracking control section 170 may cause the rebar binding robot 100 to travel so as to follow the first rebar R10, for example, by adjusting the rotation speeds of the first wheel drive motor 124a, the second wheel drive motor 124b, the third wheel drive motor 124c, and/or the fourth wheel drive motor 124d. For example, by setting one or more of the rotation speeds of the first wheel drive motor 124a, the second wheel drive motor 124b, the third wheel drive motor 124c, and the fourth wheel drive motor 124d to a rotation speed different from the rotation speeds of the other wheel drive motors, or by setting the rotation speeds of all of the first wheel drive motor 124a, the second wheel drive motor 124b, the third wheel drive motor 124c, and the fourth wheel drive motor 124d to different rotation speeds from each other, it becomes possible to allow the rebar binding robot 100 to flexibly follow the first rebar R10.

The stop control section 172 is configured to control a stopping operation of the rebar binding robot 100. For example, as described below, when the rebar binding robot 100, which has been traveling over the first rebar R12 and the first rebar R14, is determined by the first rebar end determination section 164b1 and/or the second rebar end determination section 164b2 to be near an end of a first rebar R13 or approaching the end based on the detection results of the first sensor 130a, the second sensor 130b, the third sensor 130c, and/or the fourth sensor 130d, the stop control section 172 may control the motor control section 178 to drive and stop the first wheel drive motor 124a to the fourth wheel drive motor 124d, thereby stopping the rebar binding robot 100. In addition, the rebar binding robot 100 may be stopped not only at the end of the first rebar R13, but also when it is determined that the rebar binding robot 100 is near an end of the first rebar R12 and/or an end of the first rebar R14, or is approaching the end and/or the end, instead of or in addition to the end R13e.

In addition, the stop control section 172 may, for example, when the intersection point c12 of the first rebar R10 and the second rebar R20 is calculated by the above-described intersection point calculation section 166, stop the rebar binding robot 100 in order to bind the intersection point c12 with the rebar binding unit 110.

As described below, the movement amount calculation section 174 may be configured to calculate an amount of movement when the rebar binding robot 100 moves laterally (in the X-direction), for example. For example, as described above, when the first rebar end determination section 164b1 and/or the second rebar end determination section 164b2 determine that the rebar binding robot 100 is near or approaching the end of the first rebar R12 and the end of the first rebar R14, the rebar binding robot 100 completes the rebar binding work at the intersection point c12 on the first rebar R13 located between the first rebar R12 and the first rebar R14, moves to another first rebar R10, and starts the rebar binding work at the intersection point c12.

For example, when the rebar binding robot 100 completes rebar binding work at the intersection point c12 on the first rebar R13 and then performs rebar binding work at the intersection point c12 on the first rebar R14, the rebar binding robot 100 moves in the X-direction by one interval for the X-direction interval of the first rebar R10. In this case, the movement amount calculation section 174 may calculate the movement amount based on the interval in the X-direction between adjacent first rebars R10 based on information on the position of the first rebar R10 determined by the first rebar determination section 164a1. Similarly, when the rebar binding robot 100 performs rebar binding work at the intersection point c12 on the first rebar R10 that is spaced apart by two or more in the X-direction, the amount of movement may be calculated based on the interval between the first rebars R10. Furthermore, the lateral movement (for example, horizontal movement) of the main body unit 140 by the lateral movement unit 146 during lateral movement may be performed based on the calculated movement amount. The movement amount calculation section 174 may calculate the movement amount in a direction other than the lateral movement amount. For example, the movement amount calculation section 174 may calculate the amount of vertical movement (movement in the first direction, Y-direction) of the rebar binding robot 100 based on the detection results of respective sensors 130a to 130d, the determination results by the rebar end determination section 164b1 and/or the rebar end determination section 164b2, or the like.

As the sensor unit 130, for example, a camera capable of taking two-dimensional or three-dimensional images may be used, and based on the detection results of the sensor unit 130, the position of a foreign object may be determined, for example, by the obstacle determination section 164d of the determination section 164. At a construction site where rebars are being assembled, for example, tools may be left on the surface of the rebars, or workers may be performing work thereon. These may be detected as foreign objects based on the detection results by the sensor unit 130, and based on the foreign object detection results, the foreign object bypass control section 179 may be configured to drive the first wheel drive motor 124a, the second wheel drive motor 124b, the third wheel drive motor 124c, and/or the fourth wheel drive motor 124d via the motor control section 178 to bypass the foreign object. Alternatively, the rebar binding robot 100 may be configured to bypass foreign objects by performing lateral movement, which will be described below.

The control unit 160 is, for example, a processor such as a central processing unit (CPU) that corresponds to a calculation section, and is a control unit that controls the execution of computer programs stored in the memory device 198 and calculates and processes data. The processor is a calculation unit that executes a program that executes the operations (rebar tracking and traveling, lateral movement (for example, horizontal movement), rebar binding work, and the like) of the rebar binding robot 100 using each detection data, or the like. Each unit (for example, the sensor detection result acquisition section 162, or the like) of the control unit is realized by the processor executing the program stored in the memory device 198.

The memory device 198 may include, for example, a random access memory (RAM) and a read only memory (ROM). The RAM is a memory unit in which data can be rewritten, and may be composed of, for example, a semiconductor memory element. The RAM may store programs executed by the processor and data (for example, template data used to determine the position of rebars based on the detection results of the sensor unit 130, as described below) required to execute the programs. These are merely examples, and data other than these may be stored in the RAM, or some of these may not be stored.

The ROM is a memory unit from which data can be read, and may be composed of, for example, a semiconductor memory element. The ROM may store, for example, programs executed by the control unit 160 and data that is not rewritten.

The program executed by the control unit 160 may be provided by being stored in a computer-readable memory medium such as a memory device 198 (for example, a RAM or ROM), or, when the rebar binding robot 100 of the present embodiment has a communication unit (not illustrated), the program may be provided via a communication network connected by the communication unit.

The above-described physical configuration is merely an example, and in the rebar binding robot 100 according to the embodiment of the present disclosure, the control unit 160 and the memory device 198 do not necessarily have to be configured independently. For example, the rebar binding robot 100 may be equipped with a large-scale integration (LSI) that integrates a processor and a memory. In addition, the rebar binding robot 100 may be equipped with a graphical processing unit (GPU) as the control unit 160, and the various operations described above may be realized by the GPU executing a program.

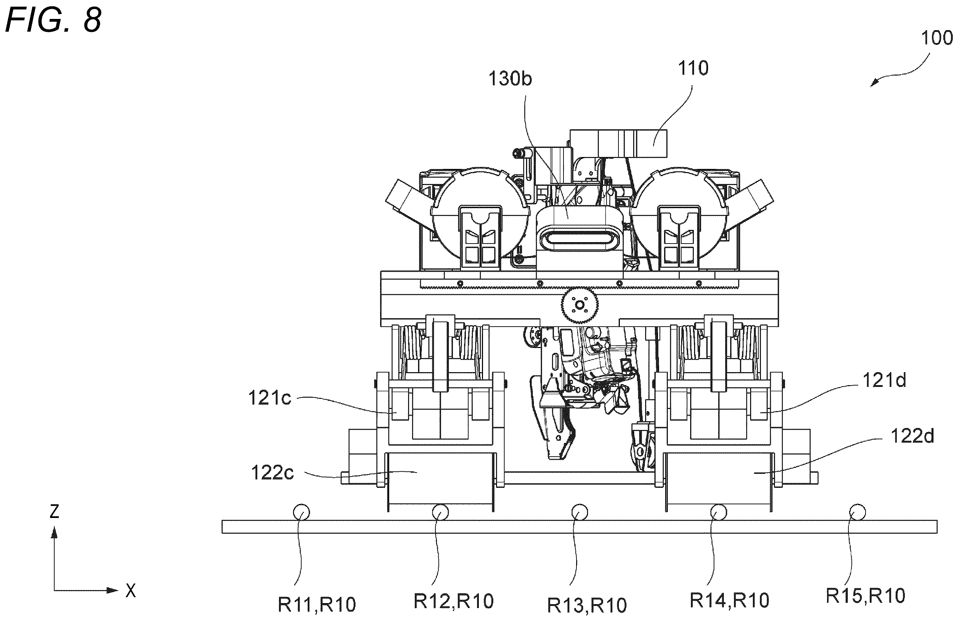

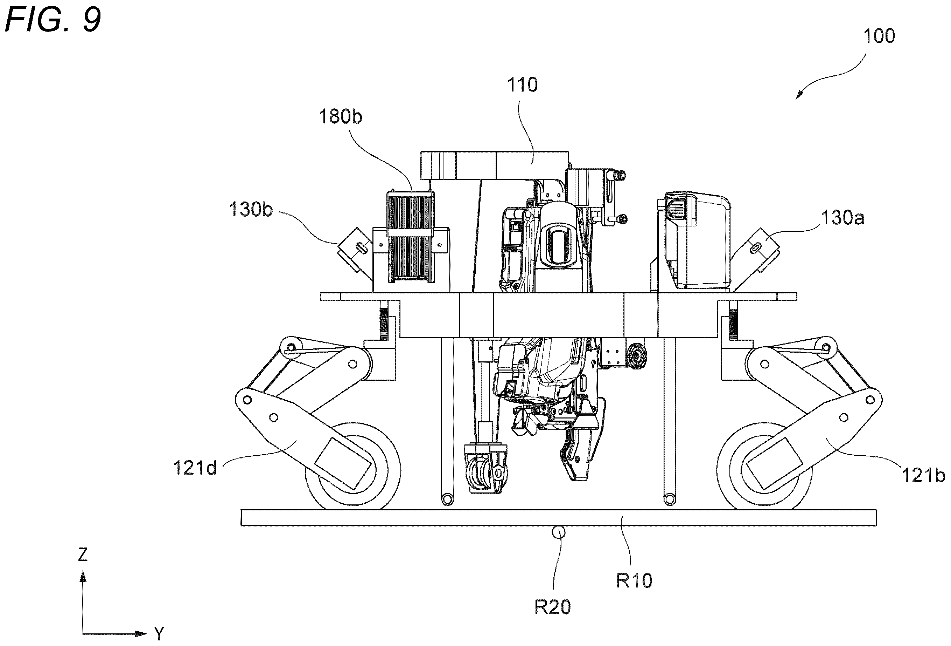

Next, a traveling operation of the rebar binding robot 100 on the rebars will be described with reference to FIGS. 8 and 9. FIG. 8 is a view of the rebar binding robot 100 traveling along the first rebar R10 as viewed from the Y-direction (-Y-direction). FIG. 9 is a view of the rebar binding robot 100 traveling along the first rebar R10 as viewed from the X-direction (+X-direction). In FIGS. 8 and 9, the rebar binding robot 100 travels in the first direction (Y-direction). As illustrated in FIGS. 8 and 9, when the rebar binding robot 100 is traveling, the third roller portion 122c of the third traveling unit 121c is located on the first rebar R12, and the fourth roller portion 122d of the fourth traveling unit 121d is located on the first rebar R14. As illustrated in FIG. 9, the second roller portion 122b of the second traveling unit 121b also travels on the first rebar R14, similar to the fourth roller portion 122d of the fourth traveling unit 121d. Although not illustrated in FIGS. 8 and 9, the first roller portion 122a of the first traveling unit 121a also travels on the first rebar R12, similar to the third roller portion 122c of the third traveling unit 121c. In this way, when the rebar binding robot 100 according to the embodiment of the present disclosure travels along the first rebar R10, the rebar binding robot 100 travels, for example, on a certain first rebar R10 (first rebar R12) and a first rebar R10 (first rebar R14) that is located two positions away from the certain first rebar R12, and binds the intersection point c12 of the first rebar R10 and the second rebar R20 that is located on a first rebar R13, which is a first rebar R10 that is located between the first rebar R12 and the first rebar R14 on which the rebar binding robot 100 travels.

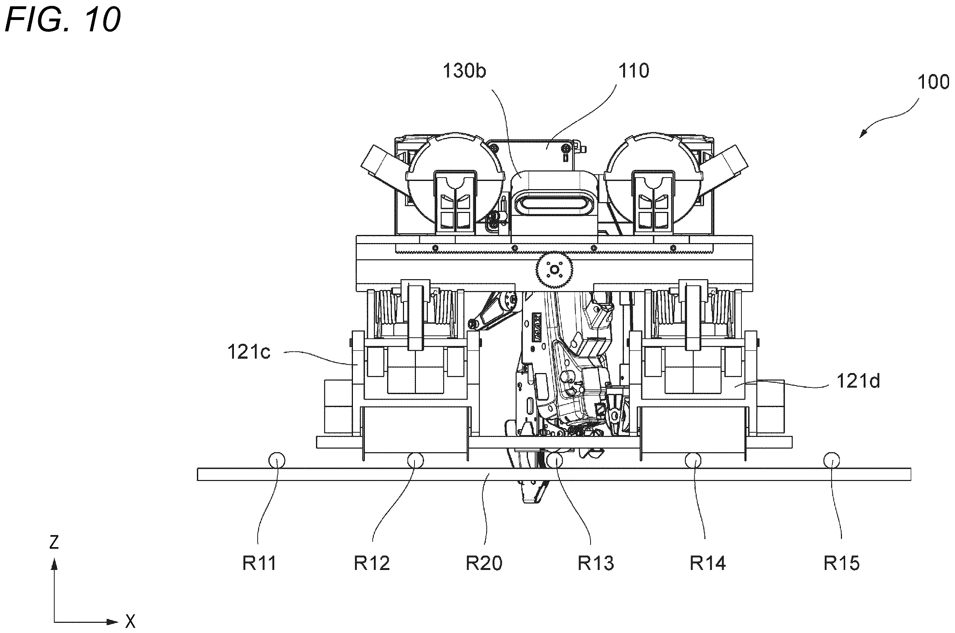

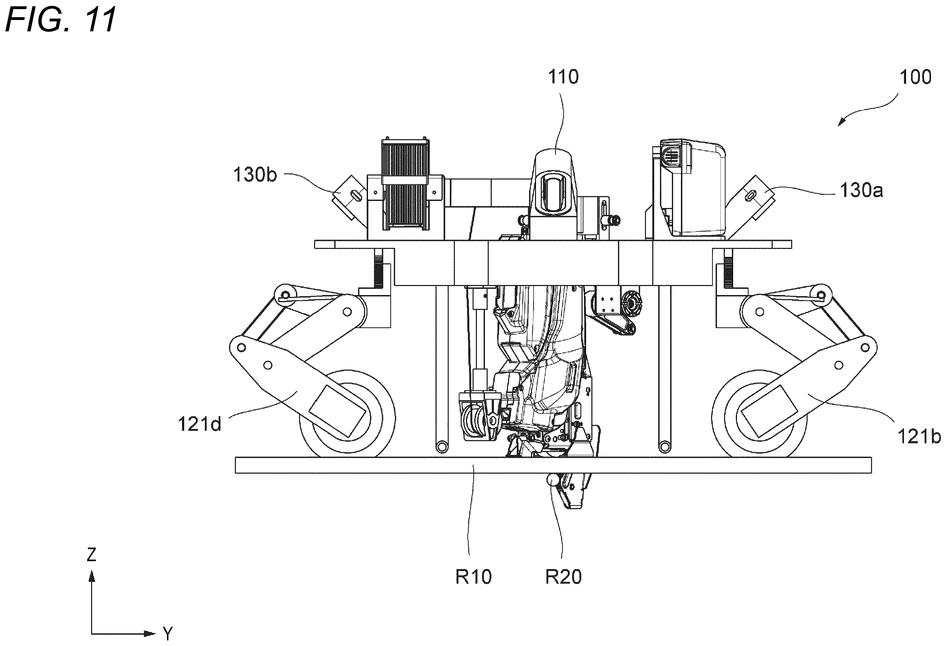

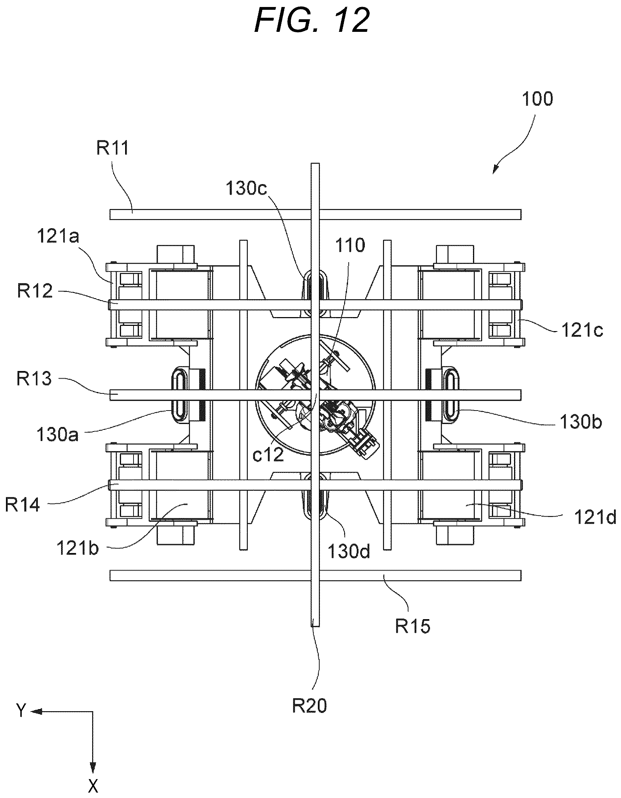

Next, the rebar binding robot 100 during rebar binding work will be described with reference to FIGS. 10, 11, and 12. FIG. 10 is a view of the rebar binding robot 100 that has stopped traveling and is performing binding work, as viewed from the Y-direction (-Y-direction). FIG. 11 is a view of the rebar binding robot 100 performing binding work, as viewed from the X-direction (+X-direction). FIG. 12 is a view of the rebar binding robot 100 performing the binding work, as viewed from below in the Z-direction (-Z-direction). FIGS. 10, 11, and 12 illustrate an example in which the rebar binding robot 100 binds the intersection point c12 of the first rebar R13 and the second rebar R20. When performing the binding work, the rebar binding robot 100 stops traveling (FIG. 10) and lowers the rebar binding unit 110 to perform the binding operation (FIGS. 11 and 12).

Next, the arrangement and configuration of the first roller portion 122a (an example of a "first wheel"), second roller portion 122b (an example of a "second wheel"), third roller portion 122c (an example of a "third wheel"), and fourth roller portion 122d (an example of a "fourth wheel") of the rebar binding robot 100 in the present embodiment will be described.

The inventors of the present application focused on the fact that a pitch of the first rebars R10 along which the rebar binding robot 100 travels may vary depending on the type of reinforced concrete structure, or the like and devised a wheel arrangement and configuration for the rebar binding robot 100 to travel on a plurality of types of rebars arranged at different pitches.

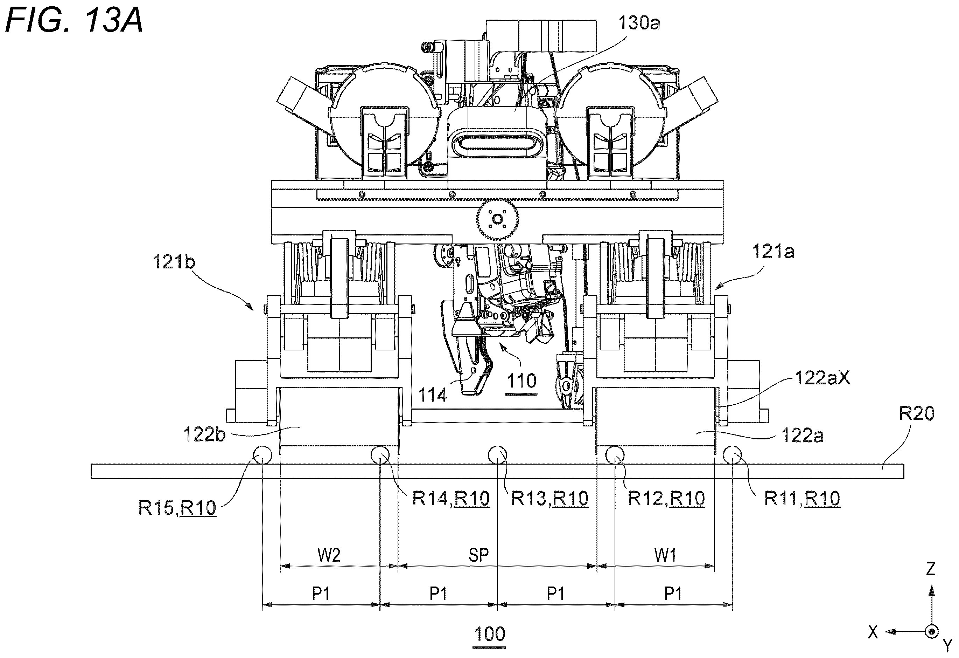

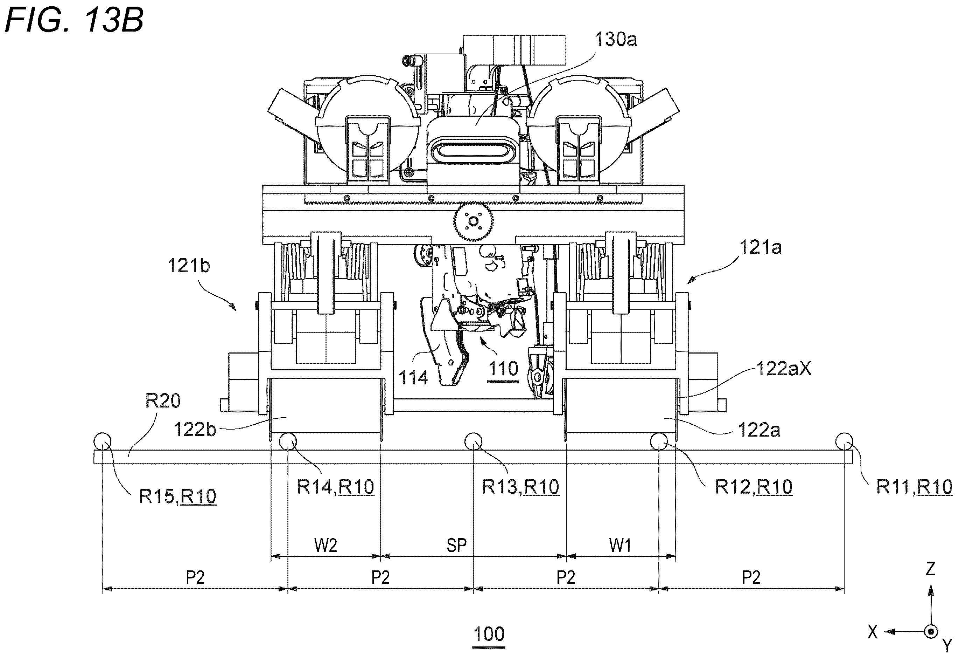

FIGS. 13A and 13B are front views of the rebar binding robot 100 traveling on a plurality of first rebars R10 arranged at a pitch of 130 mm (an example of a "first pitch P1") and a pitch of 220 mm (an example of a "second pitch P2"), as examples of the pitch of the first rebars R10, as viewed from the +Y-direction, which is the direction of advancing of the rebar binding robot 100. The wheel arrangement and configuration will be described in detail below.

The first roller portion 122a is configured to be able to travel on one first rebar R10 (for example, the first rebar R12) by rotating while in contact with the first rebar R10. As described above, the first roller portion 122a is rotationally driven by the first wheel drive motor 124a (FIG. 7) of the first traveling unit 121a.

Here, the first roller portion 122a is formed in a cylindrical shape having a central axis extending in a direction (for example, X-direction) perpendicular to the advancing direction (for example, +Y-direction).

With this configuration, the first roller portion 122a and the rebar binding robot 100 are configured to be able to travel on the first rebar R10 regardless of where the first rebar R12 is in contact with the first roller portion 122a in the width direction (X-direction).

As illustrated in the figure, a pair of flanges 122aX protruding in the up-down direction in a front view from the +Y-direction may be formed on both ends of the first roller portion 122a in the width direction (X-direction). By forming the flange 122aX, it is possible to prevent the first roller portion 122a from coming off the first rebar R12 and running off.

### [Width of Roller Portion]

Here, a width W1 (a width of an area in which the first roller portion 122a can travel by rotating while in contact with the first rebar R10 in the X-direction, which is the direction perpendicular to the advancing direction) of the first roller portion 122a is formed to be larger than a difference between two pitches at which the rebar binding robot 100 is expected to travel, that is, a difference between the second pitch P2 and the first pitch P1.

For example, when the second pitch P2 is 220 mm and the first pitch P1 is 130 mm, a difference between the second pitch P2 and the first pitch P1 is 90 mm. Therefore, the width of the first roller portion 122a is formed to be larger than 90 mm.

An interval between any first rebar R10 (FIG. 13A) arranged with the first pitch P1 and any first rebar R10 (FIG. 13B) arranged with the second pitch P2 is equal to or less than the difference between the two pitches. For example, as illustrated in FIGS. 13A and 13B, when the first rebar R13, which is the first rebar R10 to be bound to the second rebar R20, is present between the first roller portion 122a and the second roller portion 122b in the width direction (X-direction), an interval between the first rebar R12 adjacent to the first rebar R13 in FIG. 13A and the first rebar R12 adjacent to the first rebar R13 in FIG. 13B, based on the first rebar R13, is 90 mm, which is the difference between the two pitches. Therefore, by forming the width W1 of the first roller portion 122a to be larger than 90 mm, the first roller portion 122a is capable of traveling over the first rebar R12 adjacent to the first rebar R13 to be bound, whether the rebars are arranged at the first pitch P1 (FIG. 13A), whether the rebars are arranged at the second pitch P2 (FIG. 13B), or whether the rebars are arranged at any pitch larger than the first pitch P1 and less than the second pitch P2.

More specifically, when the first rebars R10 are arranged with the first pitch P1, the first roller portion 122a is capable of traveling on the first rebar R12 with an area inside a widthwise center of the first roller portion 122a in contact with the first rebar R12, and when the first rebars R10 are arranged with the second pitch P2, the first roller portion 122a is capable of traveling on the first rebar R12 with an area outside the widthwise center of the first roller portion 122a in contact with the first rebar R12.

Here, the second pitch P2 is set in the specifications as the pitch of rebars that the rebar binding robot R100 can bind, or may be the maximum value at which the rebar binding robot R100 can reasonably travel, and the first pitch P1 is set in the specifications as the pitch of rebars that the rebar binding robot R100 can bind, or may be the minimum value at which the rebar binding robot R100 can reasonably travel. For example, the second pitch P2 may be larger than 1.5 times and less than 2.5 times the first pitch P1.

The width W1 of the first roller portion 122a is configured to be smaller than a difference between 1.5 times the second pitch P2 and 0.5 times the first pitch P1. For example, when the second pitch P2 is 220 mm and the first pitch P1 is 130 mm, the difference between 1.5 times the second pitch P2 (330 mm) and 0.5 times the first pitch P1 (65 mm) is 265 mm. Therefore, the width W1 of the first roller portion 122a is formed to be smaller than 265 mm.

With this configuration, whether the first rebars R10 are arranged with the first pitch P1 or the second pitch P2, when the first rebar R13, which is the first rebar R10 to be bound to the second rebar R20, is present at an intermediate position between the first roller portion 122a and the second roller portion 122b in the width direction (X-direction), the first roller portion 122a can travel on a single rebar, the first rebar R12, which is adjacent to the first rebar R13 to be bound. This makes it possible to travel on rebars having different pitches P1 and P2 without the need for prior adjustment.

Here, the width W1 of the first roller portion 122a may further be less than 2 times the first pitch P1 (that is, less than 260 mm in the present embodiment). With this configuration, even when the first rebars R10 are arranged at the first pitch P1, when the first rebar R13, which is the first rebar R10 to be bound to the second rebar R20, is present at an intermediate position between the first roller portion 122a and the second roller portion 122b in the width direction (X-direction), the first roller portion 122a can travel on one (single) first rebar R12 adjacent to the first rebar R13 to be bound, at the center in the width direction.

The second roller portion 122b, the third roller portion 122c, and the fourth roller portion 122d may have the same configuration as the first roller portion 122a, and therefore detailed description thereof will be omitted. That is, the second roller portion 122b, the third roller portion 122c, and the fourth roller portion 122d are each configured to travel on the first rebar R14, the first rebar R12, and the first rebar R14, respectively, by rotating on the first rebars R10 while in contact with the first rebars R10, and the width of each roller portion, including a width W2 (FIGS. 13A and 13B) of the second roller portion 122b, is configured to be larger than a difference between the two pitches at which the rebar binding robot 100 is expected to travel, that is, the difference between the second pitch P2 and the first pitch P1, and smaller than the difference between 1.5 times the second pitch P2 and 0.5 times the first pitch P1.

In addition, the first roller portion 122a and the third roller portion 122c, which are arranged in a front-rear direction, each rotate and travel on the same rebar (for example, the first rebar R12), and the second roller portion 122b and the fourth roller portion 122d, which are arranged in the front-rear direction, each rotate and travel on the same rebar (for example, the first rebar R14). Furthermore, a configuration including the first wheel drive motor 124a that drives the first roller portion 122a and the second wheel drive motor 124b that drives the second roller portion 122b may be collectively referred to as a driver.

### [Interval between Roller Portions]

Next, an interval SP between the first roller portion 122a and the second roller portion 122b will be described. The interval SP between the first roller portion 122a and the second roller portion 122b is preferably larger than the first pitch P1.

With this configuration, it is possible to travel the rebar binding robot 100 so that at least one first rebar R10 (in FIGS. 13A and 13B, the first rebar R13) is present in an area between an area where the first roller portion 122a is provided and an area where the second roller portion 122b is provided in the X-direction, which is perpendicular to the advancing direction. Therefore, the first sensor 130a (an example of a "detector") and the second sensor 130b (an example of a "detector") provided between the first roller portion 122a and the second roller portion 122b are able to detect the first rebar R13 located between the first rebar R12 with which the first roller portion 122a comes into contact and the first rebar R14 with which the second roller portion 122b comes into contact.

Therefore, the rebar binding robot 100 is configured so that the first sensor 130a and the second sensor 130b detect the first rebar R13, which is the middle first rebar R10 of the three adjacent first rebars R10, and the first roller portion 122a travels while rotating on the adjacent first rebar R12 on the one hand, and the second roller portion 122b travels while rotating on the adjacent first rebar R14 on the other hand. A driver including the first wheel drive motor 124a and the second wheel drive motor 124b is configured to rotate and drive the first roller portion 122a and the second roller portion 122b based on the position of the middle first rebar R13 detected by the first sensor 130a and/or the position of the middle first rebar R13 detected by the second sensor 130b.

With this configuration, the sensor unit 130 can detect the first rebar R10 that is immediately next to the first rebars R10 along which the two rollers, the first roller portion 122a and the second roller portion 122b, are traveling, and the first roller portion 122a and the second roller portion 122b can be rotated based on the detection results, thereby making it possible to travel the rebar binding robot 100 with high precision. In addition, since the first rebar R10 detected by the sensor unit 130 is bound using the rebar binding unit 110 (an example of a "binding section"), it is also possible to detect the binding position with high accuracy.

Furthermore, the interval SP (an interval between an inner end of the first roller portion 122a and an inner end of the second roller portion 122b) between the first roller portion 122a and the second roller portion 122b is preferably smaller than 2 times the first pitch P1.

When the interval SP between the first roller portion 122a and the second roller portion 122b were to be larger than 2 times the first pitch P1, there would be a possibility that the first sensor 130a and the second sensor 130b would detect two or more first rebars R10. However, by making the interval SP smaller than 2 times the first pitch P1, it is possible to identify that the first rebar R10 detected by the first sensor 130a and the second sensor 130b is the middle first rebar R13.

In the present embodiment, since the first pitch P1 is 130 mm, it is preferable that the interval SP between the first roller portion 122a and the second roller portion 122b is larger than 130 mm and smaller than 260 mm.

In addition, when each roller portion including the first roller portion 122a has an inner side surface as in the present embodiment, it can be said that it is preferable for an interval between the inner side surface (the side surface facing inward) of the first roller portion 122a and the inner side surface (the side surface facing inward) of the second roller portion 122b to be larger than 130 mm and less than 260 mm.

It is preferable that a distance between an outer end of the first roller portion 122a and an outer end of the second roller portion 122b in a direction (for example, the X-direction) perpendicular to the advancing direction (for example, the +Y-direction) be larger than 2 times the second pitch P2, that is, 440 mm, and less than three times the second pitch P2, that is, 660 mm.

When the distance between the outer end (outer side surface) of the first roller portion 122a and the outer end (outer side surface) of the second roller portion 122b is larger than 440 mm and less than 660 mm, when the first rebars R10 are arranged at the second pitch P2, there will always be three first rebars R10 between the outer end (outer side surface) of the first roller portion 122a and the outer end (outer side surface) of the second roller portion 122b.

Therefore, the rebar binding robot 100 is capable of detecting the first rebar R13, which is the middle first rebar R10 among three adjacent first rebars R10, using the first sensor 130a and the second sensor 130b, and traveling while rotating on the adjacent first rebar R12 with the first roller portion 122a, and traveling while rotating on the other adjacent first rebar R14 with the second roller portion 122b. Therefore, based on the position of the middle first rebar R13 detected by the first sensor 130a and/or the position of the middle first rebar R13 detected by the second sensor 130b, the driver including the first wheel drive motor 124a and the second wheel drive motor 124b can rotate the first roller portion 122a and the second roller portion 122b.

The arrangement and configuration of the first roller portion 122a and the second roller portion 122b described above are the same as those of the third roller portion 122c and the fourth roller portion 122d, so detailed description thereof will be omitted.

However, the first roller portion 122a and the second roller portion 122b of the rebar binding robot 100 do not have to have the same configuration as the third roller portion 122c and the fourth roller portion 122d. For example, the rebar binding robot may have, as the third roller portion 122c and the fourth roller portion 122d, any of the configurations of the first roller portion 122a and the second roller portion 122b described above, but may not have configurations equivalent to the first roller portion 122a and the second roller portion 122b. For example, this rebar binding robot may have a tricycle configuration with a third roller portion that travels on the single middle first rebar R10, that is, the first rebar R13, instead of the first roller portion 122a and the second roller portion 122b.

As illustrated in FIGS. 13A and 13B, the rebar binding robot 100 configured as described above is configured to be able to travel on a plurality of first rebars R10 arranged at a pitch of 130 mm (first pitch P1), and is also configured to be able to travel on a plurality of first rebars R10 arranged at a pitch of 220 mm (second pitch P2), which is larger than the 130 mm pitch.

Furthermore, the rebar binding robot 100 having the above-described configuration is also capable of continuously traveling through a first traveling area in which a plurality of first rebars R10 are arranged at the first pitch P1 of 130 mm, and a second traveling area in which a plurality of first rebars R10 are arranged at the second pitch P2 of 220 mm. Here, the rebar binding robot 100 is also capable of traveling on a plurality of first rebars R10 arranged at any pitch larger than the first pitch P1 and smaller than the second pitch P2, making it possible for the rebar binding robot 100 to travel while binding rebars even in areas where the arrangement pitch varies to connect the first traveling area and the second traveling area.

The above-described embodiments are intended to facilitate understanding of the present invention, and are not intended to limit the present invention. The present invention can be modified or improved without departing from the spirit thereof, and the present invention also includes equivalents thereof. In other words, even when a person skilled in the art makes appropriate design modifications to each embodiment, they are included within the scope of the present invention as long as they have the characteristics of the present invention. For example, the elements of each embodiment and their arrangement, materials, conditions, shapes, sizes, and the like are not limited to those exemplified, and can be changed as appropriate. Furthermore, each embodiment is merely an example, and it goes without saying that partial substitution or combination of the configurations shown in different embodiments is possible, and these are also included in the scope of the present invention as long as they include the features of the present invention.

This application is based on a Japanese patent application filed on January 20, 2023 (Patent Application No. 2023-007172), a Japanese patent application filed on January 20, 2023 (Patent Application No. 2023-007174), a Japanese patent application filed on January 20, 2023 (Patent Application No. 2023-007176), a Japanese patent application filed on January 20, 2023 (Patent Application No. 2023-007177), a Japanese patent application filed on January 20, 2023 (Patent Application No. 2023-007182), a Japanese patent application filed on January 20, 2023 (Patent Application No. 2023-007187), and a Japanese patent application filed on August 10, 2023 (Patent Application No. 2023-131031), the contents of which are incorporated by reference into this application.

### INDUSTRIAL APPLICABILITY

The rebar binding device according to the present disclosure can improve tracking performance even when traveling on a plurality of rebars with different pitches.

### REFERENCE SIGNS LIST

- 100:: rebar binding robot (rebar binding device)
- 110:: rebar binding unit (binding section)
- 122a:: first roller portion (first wheel)
- 122b:: second roller portion (second wheel)
- 122c:: third roller portion (first wheel)
- 122d:: fourth roller portion (second wheel)
- 124a:: first wheel drive motor (driver)
- 124b:: second wheel drive motor (driver)
- 124c:: third wheel drive motor (driver)
- 124d:: fourth wheel drive motor (driver)
- 130a, 130b:: sensor (detector)

## Claims

1. A rebar binding device that is configured to be capable of traveling on a plurality of rebars arranged at a first pitch and that is configured to be capable of traveling on a plurality of rebars arranged at a second pitch larger than the first pitch, the device comprising:
a first wheel that is configured to rotate on the rebar and that has a width larger than a difference between the second pitch and the first pitch and smaller than a difference between 1.5 times the second pitch and 0.5 times the first pitch;
a second wheel that is configured to rotate on a rebar different from the first wheel and that has a width larger than the difference between the second pitch and the first pitch and smaller than the difference between 1.5 times the second pitch and 0.5 times the first pitch; and
a driver that is configured to rotate the first wheel and the second wheel.

2. The rebar binding device according to claim 1, wherein the second pitch is less than 2.5 times the first pitch.

3. The rebar binding device according to claim 1, wherein an interval between the first wheel and the second wheel is larger than the first pitch and smaller than 2 times the first pitch.

4. The rebar binding device according to claim 1, further comprising:
a detector configured to be capable of detecting a rebar located between a rebar to be in contact with the first wheel and a rebar to be in contact with the second wheel.

5. The rebar binding device according to claim 4, wherein the driver is configured to rotate the first wheel and the second wheel based on a position of the rebar detected by the detector.

6. The rebar binding device according to claim 5, wherein the driver is configured to rotate the first wheel and the second wheel so that the first wheel and the second wheel move in a width direction based on the position of the rebar detected by the detector.

7. The rebar binding device according to claim 1, wherein the rebar binding device is configured to be capable of continuously traveling through a first traveling area in which the plurality of rebars are arranged at the first pitch and a second traveling area in which the plurality of rebars are arranged at the second pitch.

8. The rebar binding device according to claim 1, wherein each of the width of the first wheel and the width of the second wheel is larger than 90 mm and less than 265 mm.

9. The rebar binding device according to claim 1, wherein
an interval between an outer side surface of the first wheel and an outer side surface of the second wheel is larger than 440 mm and less than 660 mm, and
an interval between an inner side surface of the first wheel and an inner side surface of the second wheel is larger than 130 mm and smaller than 260 mm.

10. The rebar binding device according to claim 1, wherein each of the first wheel and the second wheel has a columnar shape extending in a direction intersecting an advancing direction of the rebar binding device.

11. The rebar binding device according to claim 4, further comprising:
a binding section provided between the first wheel and the second wheel and configured to be capable of binding the rebar detected by the detector with another rebar that intersects with the rebar.
